# EUROPÄISCHE PATENTSCHRIFT

(11) **EP 2 525 624 B1**
(45) Veröffentlichungstag und Bekanntmachung des Hinweises auf die Patenterteilung: **11.12.2013**
(21) Anmeldenummer: 12003715.5
(22) Anmeldetag: 10.05.2012
(51) Int. Cl.: H05B 1/02, G05D 23/19

(54) **Spannungsabhängige Betriebsfreigabe**
Voltage-dependent operational release
Capacité opérationnelle dépendante de la tension

(30) Priorität: 18.05.2011 DE 102011101894
(43) Veröffentlichungstag der Anmeldung: 21.11.2012
(73) Patentinhaber: Adensis GmbH, 01129 Dresden (DE)
(72) Erfinder: Beck, Bernhard, 97332 Volkach / Dimbach (DE)

(56) Entgegenhaltungen:
- DE-A1- 10 054 615
- DE-A1-102008 048 046
- DE-C1- 19 530 826

## Beschreibung

Die Erfindung betrifft ein Gerät zur Erzeugung von Wärme oder Kälte aus elektrischer Energie mit einer elektrischen Nennleistung von mindestens 100 Watt und zur Abgabe der Wärme oder der Kälte in ein vorgegebenes Volumen, wobei die Energie mit Hilfe eines Versorgungsnetzes an Eingangsklemmen des Geräts zur Verfügung gestellt wird, wobei eine Spannungs- oder Frequenzmessvorrichtung, die an den Eingangsklemmen herrschende Spannung bzw. Frequenz misst, und wobei eine Regel- und Steuereinrichtung eine Änderung der Betriebsführung des Geräts in Abhängigkeit von der Spannung bzw. der Frequenz bewirkt.

Ein Gerät der eingangs genannten Art ist z.B. aus der DE 10 2008 048 046 A1 bekannt. Dort ist zwischen einem elektrischen Verbraucher und einem Übertragungsnetz eine Steuereinheit geschaltet, die Mittel zur Erfassung der Netzspannung oder Netzfrequenz umfasst. Die elektrische Leistungsentnahme aus dem Netz erfolgt in Abhängigkeit der gemessenen Spannung oder Frequenz.

Vorliegend betrachtete Geräte sind Geräte aus dem täglichen Erscheinungsbild, die als Wärme oder Kälte erzeugende Geräte, insbesondere als Heizstäbe in Warmwasserspeichern, als Elektroheizungen, als Nachtspeicherheizung, als Kühlräume, als Gefriertruhen, als Fußbodenheizung etc. verwendet werden. Geräte also, die die Fähigkeit besitzen eine hohe elektrische Energie aufzunehmen und als Wärme zu speichern. Als Geräte in vorliegendem Sinne sollen auch alle Haushaltsgeräte umfasst sein, die Wärme oder Kälte als Sekundärfunktion umfassen. Dies sind z.B. ein Geschirrspüler und eine Waschmaschine bei der Erwärmung des Wassers oder ein Trockner zur Verdunstung von Feuchtigkeit auf der Seite von Wärmeerzeugern und ein Gerät zur Kühlung von Wein, dem Temperieren von Zigarren etc. auf Seiten von Kühlgeräten.

Am Beispiel der Nachtspeicherheizung kann bereits aus deren Namen abgeleitet werden, dass sie bisher dazu gedacht ist, in der Nacht, also bei verbrauchsschwachen Zeiten die elektrische Energie der Grundversorgungskraftwerke aufzunehmen und später über den Tag, wenn die Wärmeenergie eigentlich gebraucht wird, wieder abzugeben. Nun ist es bei der zunehmenden Verbreitung alternativer Energien aus Wind und Solarkraftwerken zur Zeit der Fall, dass bei einem hohen Anfall an erzeugter Energie diese nicht sinnvoll genutzt werden kann und zum Teil ins Ausland verschenkt wird, um sie zu einem späteren Zeitpunkt teuer zurückzukaufen. Eine noch weniger sinnvolle Altemative stellt die Abschaltung des alternativen Kraftwerks dar, wodurch an sich erzeugbare Energie erst gar nicht generiert wird. Es bedarf also Energiespeicher, die die momentan verfügbare aber eben momentan nicht benötigte Energie zwischenspeichert, wie es ein Pumpspeicherkraftwerk im Großen und eine Nachtspeicher- oder Fußbodenheizung im Kleinen vermag. Eine analoge Betrachtung gilt für Kältegeräte, wie z.B. ein Kühlhaus, welches über die erforderliche Minustemperatur hinaus abgesenkt werden kann, um elektrische Energie in Form von Kälte zu speichern, die ansonsten zu einem eventuell netztechnisch betrachtet ungünstigen Zeitpunkt dem Versorgungsnetz entnommen werden muss.

Es sind sogenannte Smartmeter bekannt, die in Verbindung mit elektrischen Verbrauchern wie Waschmaschine, Trockner etc. verwendet werden, um diese Geräte zu einem aus Sicht der Energieerzeuger geeigneten Zeitpunkt einzuschalten. Einmal eingeschaltet spulen die Geräte dann ihr Programm ab, unabhängig davon, wie sich die Netzsituation entwickelt hat. Gerade bei der alternativen Energieerzeugung kann sich die Erzeugungssituation aber von einer Minute zur nächsten komplett anders darstellen. Die Smartmeter haben zudem den Nachteil eines relativ hohen Anschaffungspreises. Hinzu kommt noch, dass die Ansteuerung der Smartgeräte über ein auf die Versorgungsleitung aufgeprägtes oder separat übermitteltes Steuersignal einen hohen Aufwand an Steuertechnologie erfordert.

Aus der DE 31 05 714 A1 ist ein Steuersystem für elektrische Heiz- oder Kühlgeräte bekannt, bei dem ein Lastabwurfsignal von einem Energieversorger abgesetzt wird, was eine allmähliche und gleichmäßige Verschiebung eines Temperatursollwerts auf der Verbraucherseite bewirkt. Verändert sich die Spannung während des Lastabwurfintervalls, wie es bei regenerativen Energieerzeugern oft der Fall ist, wird auf die neue Versorgungssituation nicht reagiert.

Vorliegende Erfindung geht aus von der Überlegung, dass jede Einspeisung von elektrischer Energie eines auch noch so kleinen alternativen Energieerzeugers tendenziell spannungserhöhend wirkt. Jeder Verbrauch an elektrischer Energie wirkt tendenziell spannungssenkend. Liegt also eine Situation mit knapper Energieverfügbarkeit vor, ist die Spannung im Netz kleiner als in einer Situation in der Energie im Überfluss vorhanden ist und eingespeist wird.

Ausgehend von dieser Überlegung stellt sich vorliegende Erfindung die Aufgabe, ein Heiz- oder Kältegerät dazu zu befähigen, ohne Information von außen seinen Betrieb zu einem intelligenten Zeitpunkt aufzunehmen, um nicht zur Destabilisierung des Versorgungsnetzes beizutragen und über die Betriebsführung der Geräte, diese optimal zu nutzen.

Diese Aufgabe wird erfindungsgemäß dadurch gelöst, dass an die Regel- und Steuereinrichtung ein Temperatursensor angeschlossen ist, der die an einer vorgegebenen Stelle im Volumen vorliegende Temperatur misst, und dass die Regel- und Steuereinrichtung einen Sollwert für eine Solltemperatur in Abhängigkeit von der gemessenen Spannung und/oder der gemessenen Frequenz vorgibt, der einer Regeleinheit zur Regelung auf die zu erreichende Solltemperatur zugeführt wird.

Durch die direkte Spannungsmessung am betrachteten Gerät ist dieses in die Lage versetzt, aus sich heraus zu entscheiden, ob es für das Versorgungsnetz sinnvoll ist, ob das Gerät seinen Betrieb aufnimmt oder nicht. Die direkte Spannungsmessung kann dabei in dem Gerät integriert sein oder auch seitens eines Vorschaltgerätes erfolgen, ähnlich wie sie für FI-Schalter bekannt sind. Das Vorschaltgerät misst dann die aktuelle Spannung oder Frequenz und gibt je nach gemessenem Spannungs- oder Frequenzwert, den Betrieb frei oder auch nicht.

Als Volumen im Sinne obiger Ausführungen kann ein Kleinvolumen, wie ein Kühlschrank oder eine Kühltruhe verstanden werden, oder auch ein großes Volumen wie ein Kühlraum oder ein gesamtes Kühlhaus. Bei Wärmegeräten kann als Volumen analog der Wasserspeicher, in welchem ein Tauchsieder hängt oder der durch eine Wärmepumpe betrieben wird, der Keramikblock einer Speicherheizung oder der Raum, welchen es zu beheizen gilt, bis hin zum gesamten Haus verstanden werden. Es handelt sich also um einen aus bautechnischer Sicht klimatisch begrenzten Raum, unabhängig von seiner Funktion und Größe.

Unter der bei der Aufgabenstellung gewählten Formulierung "ohne Information von au-βen" soll verstanden werden, dass das Gerät zumindest in der Lage ist, ohne ein Informationssignal seitens des Energieversorgers den Zeitpunkt seiner Betriebsaufnahme und/oder seine Betriebsdauer zu bestimmen. Davon bleibt die Möglichkeit unberührt, dass mehrere Geräte, die mit derselben Technologie ausgerüstet sind, signaltechnisch miteinander verknüpft werden, um einen zusätzlichen synergetischen Effekt bezüglich einer optimalen Nutzung der aktuell erzeugten, elektrischen Energie zu erzielen.

Durch die Anpassung der Solltemperatur in Abhängigkeit von der Spannung oder der Frequenz ergibt sich der Vorteil, dass das Versorgungsnetz stabilisiert wird, in dem um eine Ideal- oder Solltemperatur im zu heizenden oder zu kühlenden Volumen gependelt wird.

Es ist vorteilhaft, wenn die Steuereinrichtung bereits bei der Freigabe des Betriebs eine Sollwertvorgabe auf eine der gemessenen Spannung zugeordnete Solltemperatur innerhalb des zu wärmenden oder zu kühlenden Volumens errechnet. Das erlaubt es, die Solltemperatur und damit die Menge der aufzunehmenden elektrischen Energie nach deren Verfügbarkeit zu richten. Beträgt die Nennspannung des Versorgungsnetzes z.B. 230 Volt und liegt ein hohes Aufkommen an Windenergie vor, das die Spannung auf 245 Volt ansteigen lässt, so sollte die Solltemperatur bei Wärmegeräten hoch und bei Kältegeräten niedrig gewählt werden, um die Phase der hohen Verfügbarkeit voll auszunutzen. Ist es z.B. Winter und die Raumtemperatur im Haus ist auf einen mittleren Wert von 21 °C gewünscht, wobei momentan 20,5 °C herrschen, so sollte die Solltemperatur auf eine Erhöhung von z.B. 24°C gesetzt werden, eine Temperatur, wie sie auch bei hoher Sonneneinstrahlung auf die Gebäudefenster vorliegen würde, und die für die Bewohner noch angenehm wahrgenommen wird. Ist die gemessene Spannung dagegen lediglich 235 Volt, ist es sinnvoller die Solltemperatur nur auf eine moderat erhöhte Temperatur von z.B. 22°C zu setzen, um der Gesamtheit der am Versorgungsnetz angeschlossenen Verbraucher ausreichend Gelegenheit zur Vorratsspeicherung von Wärme zu geben.

Eine weitere vorteilhafte Ausgestaltung sieht vor, dass der Zeitpunkt der Betriebsaufnahme nach der Freigabe in Abhängigkeit der im Volumen gemessenen Temperatur erfolgt mit der Maßgabe, dass der Zuschaltpunkt bei kleinerer Temperaturdifferenz zwischen der Temperatur im Volumen und der zugeordneten Solltemperatur später liegt als bei größeren Temperaturdifferenzen. Diese Maßnahme verfolgt das Ziel, dass Geräte mit einer hohen Temperaturdifferenz zwischen der von der aktuellen Spannung abgeleiteten Solltemperatur und der tatsächlich herrschenden Temperatur bevorzugt betrieben werden können. Es wird also von der Natur her eine Prioritätenfolge für die Betriebsfreigabe gebildet, bei der die Geräte, bei denen keine Temperaturdifferenz zwischen dem Sollwert und dem Istwert vorliegt am Ende stehen, und die mit hohen Temperaturdifferenzen am Anfang.

Eine weitere Ausgestaltung sieht vor, dass die Freigabe des Betriebs bei einer gemessenen Spannung von unterhalb eines Grenzwertes der Netzspannung, insbesondere unterhalb von 95% der Netzspannung, blockiert wird, solange bei Wärmeerzeugung kein unterer Grenzwert bzw. bei Kälteerzeugung kein oberer Grenzwert der vorliegenden Temperatur erreicht ist. Diese Maßnahme setzt die Freigabe oder die Regelung gemäß der Erfindung de facto außer Kraft, in dem das Gerät betrieben werden kann, als ob es nicht den Beschränkungen im Betriebsmodus unterliegt. Ist bei einer Kühltruhe beispielsweise der oberste zulässige Temperaturwert von minus 15°C erreicht, würde ein weiteres Ansteigen der Temperatur zu einer Schädigung des Kühlgutes führen, was es zu verhindern gilt. Bei einem Wärme abgebenden Gerät ist analog eine unterste Temperatur zu vermeiden, bei der z.B. das Schmelzgut in einem Ofen erstarrt, eine Wohnung unwirtlich wird, sich eine chemische Reaktion verändert, oder dergleichen. Aus ähnlichen Betrachtungen von der umgekehrten Seite heraus ist es sinnvoll dass unabhängig von dem gemessenen Spannungswert der Betrieb des Gerätes blockiert wird, wenn eine obere Grenztemperatur im Volumen bei Wärmeerzeugung oder eine untere Grenztemperatur im Volumen bei Kälteerzeugung erreicht ist. Auch eine zu kalte oder zu warme Temperatur im betrachteten Volumen kann zu Schäden oder Beeinträchtigungen führen.

In einer weiterführenden Ausgestaltung ist es vorgesehen, dass die Steuervorrichtung aus dem zeitlichen Verlauf der Temperaturänderung im Volumen den noch zum Erreichen einer Solltemperatur benötigten Wärmebedarf bzw. die zum Erreichen einer Solltemperatur freie Thermokapazität errechnet und den errechneten Wert entweder autark für seinen eigenen Betrieb nutzt, oder an einem Signalausgang zur Verfügung stellt, um ein koordinierten Betrieb mehrerer Geräte zu ermöglichen.

Bei der autarken Nutzung der ersten zeitlichen Ableitung des Temperaturverlaufs wird ein Verhältnis gebildet zwischen der Temperaturveränderung und dem vorliegenden Volumen. Dieses dient dazu, den nächsten Zuschaltpunkt früher oder später zu legen, je nach dem, ob sich die Verhältnisse im Speichervolumen geändert haben. Die Steuerung kann somit von einer unterschiedlichen Befüllung von Kühlhäusern und Gefrierschränken wie aber auch vom aktuellen Wärmezustand eines Wohnhauses ausgehend, ihre Regelung optimieren und anpassen.

Bei mehreren signaltechnisch miteinander gekoppelten Geräten erlaubt die Verwertung der Information zum Wärmebedarf oder zur Kältekapazität es einer zentralen Steuereinrichtung oder Leitwarte, die Energie so zuzuteilen, dass immer ein Zustand maximaler Flexibilität vorliegt, bei dem sich die Nennspannung nach unten und nach oben in einem großen Rahmen im Sinne einer großen Energieeinspeisung oder eines großen Energieverbrauchs verändern kann. Dies soll an einem Beispiel näher veranschaulicht werden. Es sind 100 Kühlgeräte an das Versorgungsnetz angeschlossen, von den 10 ein besonders kleines Volumen und 5 ein besonders großes Volumen besitzen. Von den 5 Kühlgeräten mit großem Volumen sind zwei dabei, die erst kürzlich mit frischer warmer Ware, wie z.B. je 50 Tonnen Erdbeeren, als Neubestückung gefüllt wurden. Nach der zunächst ansteigenden Temperatur im Volumen, was von dem Füllgut erwärmt wird, schließt sich eine Phase eines langsamen Temperaturabfalls an, da das eigentliche Kühlaggregat die 50 Tonnen Erdbeeren nur sehr langsam auf die gewünschte Gefrier- oder Lagertemperatur bringen kann. Aus diesem Verhalten des Temperaturverlaufs kann geschlossen werden, dass diese beiden Kühlgeräte über längere Zeit einen hohen Energiebedarf haben. Ist elektrische Energie in hohem Maße verfügbar, sollte diese zunächst in die beiden Geräte investiert werden, da eine Versorgung der beiden Geräte zu Zeiten schwacher Energieerzeugung schwierig ist, da alle anderen Geräte ebenfalls zu versorgen sind. Analog können die kleinen Geräte mit einer bei Leistungseinspeisung schnellen Reaktion bezüglich der Temperaturänderung erst später in Betrieb genommen werden, da hier bereits geringe Energiemengen ausreichen, um eine Maximaltemperatur im Volumen zu erreichen und diese Geräte ansonsten in einer kritischen Spannungssituation mit überhöhter Spannung am Geräteeingang keinen Beitrag zur Stabilisierung über ein Absenken der Spannung leisten könnten. Es gilt der Grundsatz möglichst alle Verbraucher leistungsaufnahmebereit zu halten, um immer spannungssenkend wirken zu können.

Auch kann es von Vorteil sein, wenn eine Steuerzentrale vorgesehen ist, die als Eingangssignale die an den Signalausgängen der Steuereinrichtungen anliegenden errechneten Werte zugeführt sind, und die den Betrieb des Gerätes mit der höheren Speicherreserve an Wärme oder Kälte bei einem kleineren gemessenen Spannungswert freigibt als den Betrieb des Gerätes mit geringerer Speicherkapazität. Abweichend zu obigem Beispiel werden dann die Kühlgeräte mit schneller Temperaturveränderung im Volumen bevorzugt mit Energie versorgt, um zu verhindern, dass sie in eine Notsituation kommen, in welcher sie dann unbedingt die Betriebsfreigabe auch bei niedrigen gemessenen Spannungswerten benötigen.

Bei Geräten mit variabler Leistungsaufnahme oder mit mehreren Schaltstufen entsprechend mehreren zugeordneten Leistungsaufnahmen ist es angebracht, wenn die Freigabe des Betriebs auf der untersten Schaltstufe erfolgt. So wird bei einer großen Menge an Geräten vermieden, dass es zu unerwünschten, massiven Rückkopplungen auf das Versorgungsnetz kommt, wenn Hunderte oder Tausende Geräte gleichzeitig auf ihre höchste Stufe eingeschaltet werden In die gleiche Richtung zielt die Maßnahme, dass die Steuereinrichtung mit einem Zeitglied versehen ist, welches nach der Freigabe des Betriebs eine vorgebbare Zeitspanne verstreichen lässt, bevor der Betrieb aufgenommen wird. Die Zeitspanne kann geeigneter Weise durch einen Zufallsgenerator vorgegeben sein, der sie aus einem vorgegebenen Bereich, der bei einer Wechselspannung insbesondere zwischen 0 und 5000 Wellen liegt, auswählt.

Eine weitere auf die Verteilung der Betriebsfreigaben mehrerer Geräte gerichtete Ausgestaltung sieht vor, dass bei jedem Gerät die Dauer des Betriebs nach der Betriebsfreigabe und/oder die Dauer der Betriebsfreigabe einstellbar ist. Die Dauer der Betriebsfreigabe spielt insbesondere bei hoch volatilen Netzen eine Rolle, bei denen sie die Einspeise- und/oder Verbrauchssituation schnell ändern kann. Dann macht es wenig Sinn, einmal eine Freigabe zu setzen, und für mehrere Stunden aufrecht zu erhalten. Der Anlauf des Betriebs könnte dann zu einem aus Sicht des Netzbetreibers eher ungünstigen Zeitpunkt erfolgen. Ebenso ist es vorteilhaft, wenn die Dauer des Betriebs nach der erfolgten Betriebsaufnahme einstellbar ist. Ein Kühlgerät z.B. setzt in der ersten Minute seines Betriebs die eingespeiste Energie beinahe vollständig in Wärme um (Anlaufen des Kompressors etc.) bis ein effizienter Kühlvorgang erreicht ist. Der Betrieb sollte zumindest solange beibehalten werden, bis ein minimaler Kühlnutzen entstanden ist.

Ein geeigneter Regelalgorithmus sieht vor, dass ein linearer Bereich um die Nennspannung herum vorgegeben ist, in dem keine Beschränkung zur Freigabe oder zur Regelung erfolgt. Innerhalb dieses Bereichs befindet sich das Versorgungsnetz in einem stabilen Betriebszustand, der Eingriffe überflüssig macht.

Weitere Vorteile und Ausgestaltungen der Erfindung ergeben sich aus der folgenden Beschreibung eines Ausführungsbeispiels anhand der Figuren. Es zeigen:
- Figur 1: Ein erfindungsgemäßes Gerät mit drei Schaltstufen;
- Figur 2: ein erfindungsgemäßes Gerät als Vorschaltausführung für Bestand ohne Schaltstufen;
- Figur 3: ein Regelschema nach dem das Gerät betrieben wird; und
- Figur 4: mehrere Geräte in einem Versorgungsnetz.

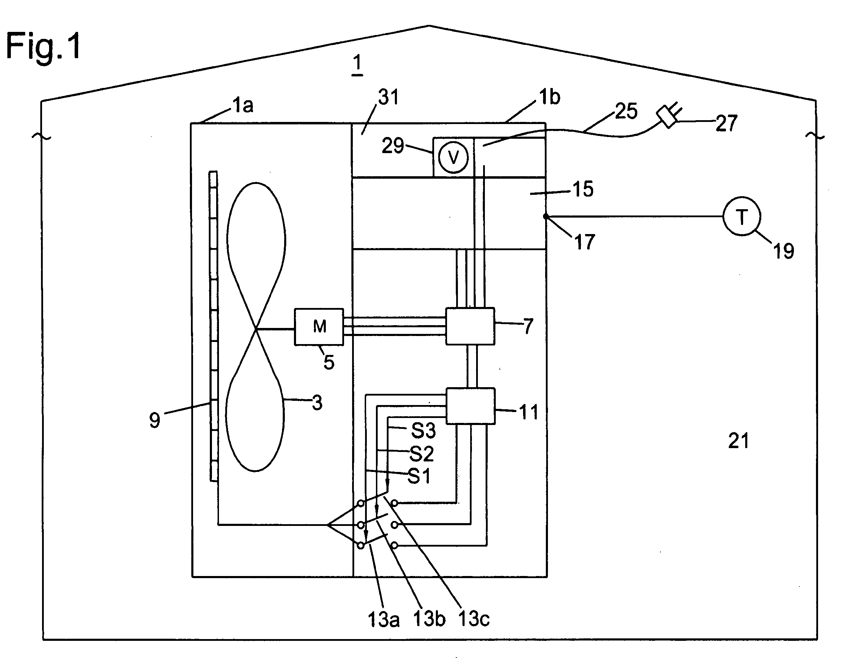

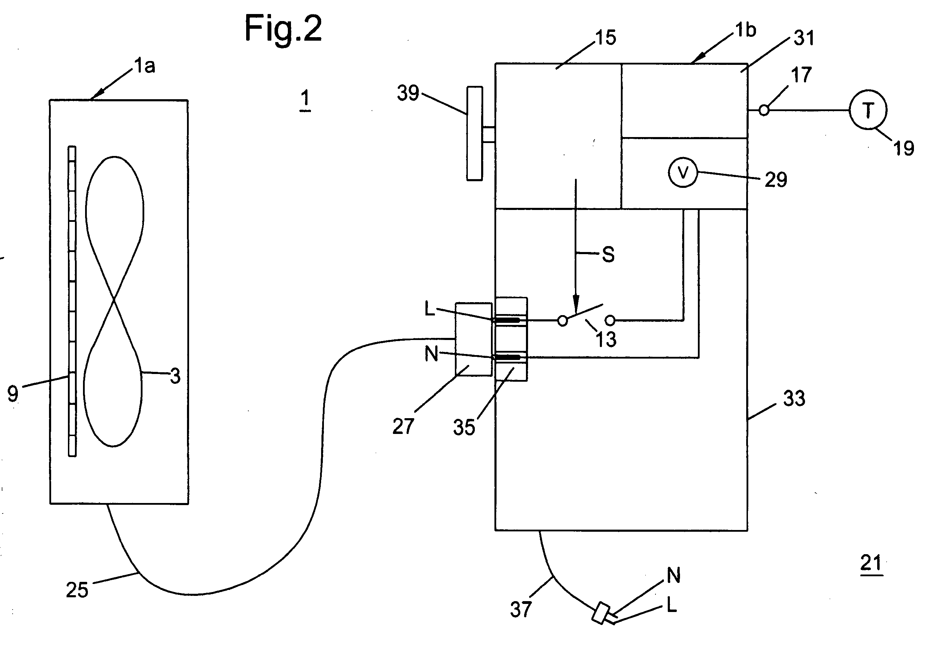

In der Figur 1 ist mit 1 ein Heizgerät zur Erzeugung von Wärme gezeigt, welches ein mobiles Heizgerät 1 sein soll. Das Heizgerät 1 umfasst ein die Wärme generierendes Teil 1a und getrennt gezeichnet eine Steuer- und Regeleinrichtung 1 b. Allgemein gilt, dass das Wärme erzeugende Teil 1a und die Regel- und Steuereinrichtung 1 b als ein einziges Gerät 1 ausgebildet sein können, also mit in einem einzigen Gehäuse untergebrachten Wärme erzeugenden Teil 1a und im Gehäuse integrierter Regel- und Steuereinrichtung 1 b, wie es in der Figur 1 gezeigt ist. Wie es später anhand der Figur 2 gezeigt ist, sind auch zwei getrennte Komponenten möglich.

Das Heizteil 1a umfasst einen Ventilator 3, der mittels eines Motors 5 angetrieben wird. Die Ansteuerung und Stromversorgung des Motors 5 erfolgt über eine Motorsteuereinrichtung 7, die die Stromversorgung und die Drehzahl des Motors 5 übernimmt. Desweiteren umfasst das Heizteil 1a ein Heizgitter 9, welches über eine Heizgittersteuerung 11 mit elektrischem Strom versorgt wird. Die Heizgittersteuerung 11 generiert auch den, der jeweiligen Leistungsstufe zugeordneten Strom und erzeugt Steuersignale S1, S2 und S3, die drei Trennschalter 13a, 13b und 13c schließen oder öffnen. Die Trennschalter 13a - 13c verbinden im geschlossenen Zustand das Heizgitter 9 mit der Heizgittersteuerung 11. Je nach dem, welches Steuersignal S1 - S3 anliegt, wird der Betrieb auf unterschiedliche Leistungsstufen bezüglich der Heizleistung des Heizgitters 9 freigegeben. Die Regel- und Steuereinrichtung 1 b weist neben einer Regeleinheit 15 noch einen Messeingang 17 auf, an welchem ein Temperatursensor 19 angeschlossen ist. Der Temperatursensor 19 ist an geeigneter Stelle in einem Volumen 21 positioniert, welches ein zu beheizendes Gartenhäuschen darstellt, aber auch jedes andere zu temperierende Volumen wie z.B. ein Zimmer, ein Ofenraum usw. sein kann. Der Temperatursensor 19 kann unmittelbar am Gehäuse (nicht gezeigt) des Heizgerätes 1 befestigt sein. Er kann ebenso drahtlos oder drahtgebunden an der gewünschten Stelle im Volumen 21 vorgesehen sein.

Das Heizgerät 1 besitzt beispielsweise eine Heizleistung von 2 kW und ist mittels eines Kabels 25 mit Normstecker 27 über eine konventionelle Steckdose im Gartenhäuschen mit dem Versorgungsnetz verbunden. Bei Heizgeräten 1a größerer Leistung ist der Normstecker 27 für das Einstecken in eine Kraftsteckdose mit Drehstromanschluss ausgebildet. Das Kabel 25 mündet im Heizgerät an einem internen Klemmenblock (nicht gezeigt), von welchem aus die vorhandenen, elektrische Energie benötigenden Komponenten, wie der Motor 5, das Heizgitter 11, die Motorsteuereinrichtung 11, die Regeleinheit 15 usw. mit Strom versorgt werden. Zusätzlich ist am Klemmenblock, an dem das Kabel 25 mündet, eine Spannungsmesseinrichtung 29 angeschlossen, die die an dem Heizgerät 1 anliegende Spannung U misst.

Die Regel- und Steuereinrichtung 1 b umfasst noch eine Recheneinheit 31, der als Eingangssignal das von dem Temperatursensor 19 erzeugte Temperatursignal T und der momentan vorliegende Spannungswert U zugeführt werden. Die Recheneinheit 31 errechnet nach den mit Hilfe der Figur 2 später näher beschriebenen Vorgaben, ob und wenn ja, welches Steuersignal S1 bis S3 zu generieren ist, um den entsprechenden Trennschalter 13a - 13c zu schließen, damit der Betrieb auf der den Trennschaltern 13a - 13c zugeordneten Heizstufe freigegeben wird. Ein entsprechendes Steuersignal S1 - S3 wird von der Regeleinheit 15 an die Trennschalter 13a - 13c abgegeben. Wenn an keinem der Trennschalter 13a - 13c ein Steuersignal anliegt, sind alle Trennschalter 13a - 13c geöffnet, und das Wärme generierende Teil 1a ist nicht freigeschaltet und es kann keine elektrische Energie aus dem Netz beziehen.

Das Heizgerät 1 wird wie folgt betrieben: Die Recheneinheit 31 bildet aus der von der Spannungsmesseinrichtung 29 gemessenen Spannung U und der vom Temperatursensor 19 gemessenen Temperatur T das Steuersignal S1, S2 oder S3, das jeweils einen zugeordneten Trennschalter 13a bis 13c ansteuert, der im geschlossenen Zustand jeweils eine andere Leistungsstufe des Wärme erzeugenden Teils 1 a zum Betrieb des Heizgitters 9 freigibt. Die jeweilige Leistungsstufe wird dabei in der Heizgittersteuerung 11 gebildet. Der Betrieb wird also in diesem Fall lediglich in Abhängigkeit der herrschenden Spannung U freigegeben und die Aufnahme des Heizvorgangs erfolgt nach den Maßgaben des in der Regeleinheit 15 implementierten Regelschemas, wie es prinzipiell auch bei jedem konventionellen Heizgerät, üblicherweise mit einer Zwei - Punkt Regelung, der Fall ist.

Die oben beschriebene Ausführung ist für das Heizgerät 1 nach der Figur 1 vorgesehen, das bereits bei der Planung und Fertigung mit der spannungsabhängigen Steuerung der Betriebsführung ausgestattet ist. Das Steuersignal S3 mit Schließen des Trennschalter 13c führt z.B. zu einer uneingeschränkten Betriebsfreigabe für das Heizgitter 9 auf einer beliebigen Leistungsstufe, wie sie von dem internen Regelschema vorgesehen ist. Ein Betrieb des Heizgitters 9 ist gänzlich blockiert, wenn keines der Steuersignale S1 bis S3 mit Hilfe der Recheneinheit 31 erzeugt wird, und alle Trennschalter 13a bis 13c geöffnet sind. Die Steuersignale S1 und S2 steuern entsprechend Trennschalter 13a, 13b an, die den Betrieb des Heizgitters 9 auf einer kleineren Leistungsstufe als die vom Trennschalter 13c freigegebene erlauben. Für den Betrieb des Motors 5 kann eine entsprechende Freigabe von Leistungsstufen erfolgen, auf denen der Motor 5 jeweils mit einer anderen Drehzahl zum Abtransport der im Heizgitter erzeugten Wärme betrieben wird.

Anstelle der Freigabe des Betriebs auf einer Leistungsstufe kann der Betrieb mit Hilfe der Regel- und Steuereinrichtung 1 b auch stufenlos erfolgen. Dann erzeugt die Regeleinheit 15 Signale, die in Leistungsströme umgesetzt werden, die direkt über einen einzigen Trennschalter 13 einen Kältekompressor, eine Heizwendel, eine Wärmepumpe etc. speisen.

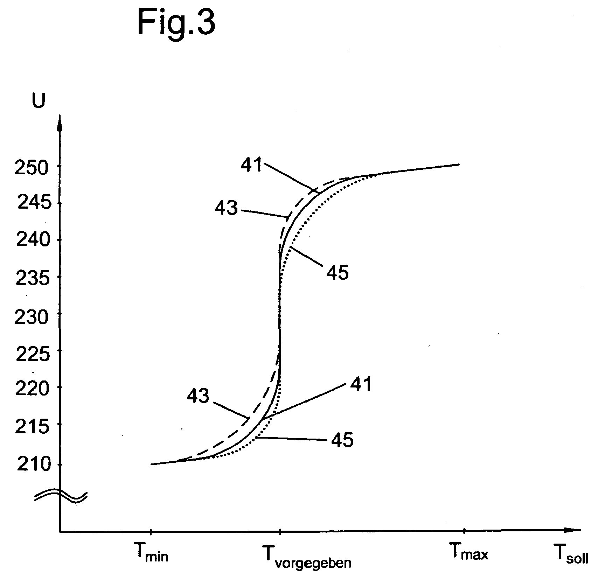

Die Figur 2 zeigt einen bestehenden Heizlüfter 1a mit seinem Stromzuführungs-kabel 25 und seinem Normstecker 27, wie er millionenfach in Haushalten vorhanden ist. Für die Anwendung vorliegender Erfindung in Verbindung mit diesen Bestandsgeräten 1a ist die Regel- und Steuereinrichtung 1 b als Vorschaltgerät ausgeführt, welches bis auf die Steckverbindung der Stromversorgung physisch getrennt vom Heizlüfter 1a verbaut werden kann. Diese modifizierte Regel- und Steuereinrichtung 1 b wird im Folgenden als Vorschaltgerät 33 bezeichnet, dass sich von der zuvor beschriebenen Regel- und Steuereinrichtung 1 b zum einen dadurch unterscheidet, dass es eine Buchse 35 zur Aufnahme des Normsteckers 27 des Heizteils 1a aufweist, sowie mit einem eigenen Versorgungskabel 37 mit Stecker versehen ist, welcher wiederum in eine konventionelle Steckdose eingesteckt werden kann. Zum anderen unterscheidet sich das Vorschaltgerät 33 durch ein gerändeltes Einstellrad 39 mit welchem eine Wunsch- oder Idealtemperatur vorgegeben werden kann. Die Wunschtemperatur T_{vorgegeben} wird von der Regeleinheit 15 nach Maßgabe der in der folgenden Figur 3 beschriebenen Rechen- und Regelalgorithmen verwertet. Alle anderen Komponenten, die auch mit demselben Bezugszeichen versehen sind wie in der Figur 1, erfüllen dieselbe dort bereits beschriebene Funktion.

Bei dieser Ausführungsform als Vorschaltgerät 33, welches zusammen mit einem bestehenden Kühl- oder Heizgerät 1a betrieben werden soll, ist es sinnvoll, dass der Temperatursensor 19 nachträglich in das Volumen 21 (Innenraum Gefriertruhe, Innenraum Kühlschrank, Brennkammer, Warmwasserboiler usw.) des bestehenden Gerätes 1 a eingebaut wird, oder dass der bereits dort vorhandene Temperatursensor mit dem Messeingang 17 verbunden wird, um ein Signal entsprechend der aktuell im Volumen 21 herrschenden Temperatur an die Regel- und Steuereinrichtung 1 b zu übertragen. Im Falle des Bewahrens des ursprünglichen Temperatursensors sollte das geräteinteme Regelschema des Bestandgeräts 1a außer Kraft gesetzt werden, indem z.B. je nach Sensortyp der zugeordnete Messeingang des Regelglieds kurzgeschlossen wird oder offen bleibt. Alternativ kann das Regelschema dadurch außer Kraft gesetzt werden, dass am Standard mäßig vorgesehenen Regelglied des Gerätes 1a dieses auf maximale Kühlung oder maximale Heizung gestellt wird, damit keine interne Regelung mehr erfolgt, sondern permanent eine Kühl- oder Heizanforderung je nach Gerätetyp anliegt. Die Einstellung der Temperatur im Volumen 21 erfolgt über die externe spannungsabhängige Regelung durch eine modifizierte Betriebsführung, insbesondere durch eine gesteuerte Betriebsfreigabe auf gegebenenfalls unterschiedlichen Leistungsstufen. Dieser Eingriff in Bestandsgeräte ist ohne einen großen Aufwand zu bewerkstelligen. Bei bezüglich ihrer Temperatureinhaltung unkritischen Geräten 1 ist alternativ auch die einfachere Variante denkbar, lediglich eine Spannungsfreigabe zu steuern und den eigentlichen Heiz- oder Kühlbetrieb dem geräteinternen Regelschema zu überlassen.

Auch bei dieser Ausführungsform umfasst die Regel- und Steuereinrichtung 1 b die Recheneinheit 31, der als Eingangssignal das von dem Temperatursensor 19 erzeugte Temperatursignal T und der gemessene Spannungswert U zugeführt werden, der mittels der Spannungsmesseinrichtung 29 gemessen wird. Die Recheneinheit 31 errechnet nach den mit Hilfe der Figur 2 später näher beschriebenen Vorgaben, ob das Steuersignal S zu generieren ist, um den zugehörigen Trennschalter 5 zu schließen, damit der Betrieb für das Bestandsgerät 1a freigegeben wird. Da dessen interner Regelkreis au-βer Kraft gesetzt ist, entspricht eine Freigabe auch automatisch ein Anlaufen des Betriebs des Gerätes 1. Ein entsprechendes Steuersignal S wird von der Regeleinheit 15 an den Trennschalter 5 abgegeben. Wenn kein Steuersignal S anliegt, ist das Wärme generierende Teil 1a nicht freigeschaltet und es kann keine elektrische Energie aus dem Netz beziehen.

Im Folgenden wird anhand der Figur 3 der Regelalgorithmus, nach welchem die Recheneinheit 31 arbeitet, näher erläutert. Dazu soll zunächst ein dicker, durchgezogen gezeichneter Kurvenverlauf 41 diskutiert werden, bevor auf die punktiert und gestrichelt gezeichneten Kurvenverläufe eingegangen wird. In der Figur 3 ist die herrschende Netzspannung U über der Solltemperatur Tₛₒₗₗ aufgetragen. Die Solltemperatur Tₛₒₗₗ ist dabei die Temperatur T, die von der Recheneinheit 31 errechnet wird, um zur Stabilisierung des Versorgungsnetzes beizutragen und ist nicht zu verwechseln mit der vom Nutzer gewünschten Ideal- oder Wunschtemperatur T_{vorgegeben}. Sie hat nur insofern einen Bezug zur Wunschtemperatur des Nutzers als sie um diese Wunschtemperatur herum je nach Nutzererfordemissen nach oben oder unten pendelt. Ansonsten ist sie bei den lediglich auf ihre Betriebsfreigabe hin gesteuerten Geräten 1 unabhängig von der am Heizgerät 1 eingestellten Wunschtemperatur oder der mittels des Rändelrades 39 eingestellten Wunschtemperatur.

Das zu beheizende Volumen 21 ist ein Zimmer, welches idealer Weise auf eine Temperatur T von 20°C gehalten werden soll. Diese Temperatur wird als gewünschte, eingestellte oder vorgegebene Temperatur T_{vorgegeben} bezeichnet und ist von dem Nutzer des Geräts 1a innerhalb des betriebsmäßig vorgesehenen Temperaturbereichs frei wählbar. Diese vorgegebene Temperatur T_{vorgegeben} kann an einem Einstellglied, z.B. über das Rändelrad 39 vom Nutzer eingestellt werden. Ist die vom Temperatursensor 15 gemessene Temperatur T gleich der vorgegebenen Temperatur T_{vorgegeben}, so wird bei einer herrschenden Spannung von plus/minus 5 Volt um die Nennspannung von 230 Volt herum, also in einem Bereich zwischen 225 V und 235 V, keine Einschränkung im Betrieb des Wärme erzeugenden Teils 1 a vorgenommen. Dies bedeutet, dass das Gerät 1a um seine vorgegebene Wunschtemperatur T_{vorgegeben} herum pendelt. Die mit diesem Pendeln verbundene Varianz in der vorgegebenen Temperatur T_{vorgegeben} wird in der Betrachtung außen vor gelassen, um die Beschreibung übersichtlich zu halten. In der Realität ist T_{vorgegeben} aber ein Bereich, der z.B. von dem klassischen Zweipunkt-Regelelement des Heizgeräts 1 a oder ggf. des Vorschaltgeräts 33 eingehalten wird. Alternativ käme auch ein äquivalenter, entsprechend in der Regel- und Steuereinrichtung 1 b integrierter Zweipunkt - Regelkreis infrage. Die vorgegebene Temperatur T_{vorgegeben} ist also selber eine Variable, die sich in den engen Grenzen des Zweipunktreglers bewegt. Die Recheneinheit 31 wird innerhalb dieses Spannungsbereichs von 225 V bis 235 V das Steuersignal S3 bei dem Gerät nach der Figur 1 oder S bei dem Gerät nach der Figur 2 abgegeben, welches den uneingeschränkten Betrieb auf allen Leistungsstufen erlaubt. In dem Bereich zwischen 225 V und 235 V regelt die Regeleinheit 15 also auf die gewünschte Temperatur T_{vorgegeben} hin, mit dem ihr inhärenten klassischen Regelschema der Zwei - Punkt Regelung.

Die Nutzung des Raumes oder Volumens 21 erlaubt es, dass die Temperatur T bis auf eine untere Temperatur Tₘᵢₙ von 18°C absinkt. Das heißt, dass zwischen 18°C und 20°C der Betrieb des Wärme erzeugenden Teils 1 a aus Sicht der Temperaturanforderung des geräteinternen oder in der Regel- und Steuervorrichtung 1 b bzw. dem Vorschaltgerät 33 integrierten Zweipunktreglers frei gegeben wird. Diese Freigabe erfolgt erfindungsgemäß nur in Abhängigkeit der gemessenen Spannung U. Fällt diese unter einen minimalen Wert Uₘᵢₙ von z.B. 210 Volt, erfolgt die Freigabe nur, wenn der Temperatursensor 19 den untersten Grenzwert Tₘᵢₙ im Volumen 21 misst. Da die Spannungssituation in dem gesamten Bereich zwischen 225 V und 235 V zufrieden stellend ist, kann die Freigabe mit dem Steuersignal S3 erfolgen (beim Beispiel der Figur 1), was einer Freigabe für hohe Heizleistungen oder eine Einspeisung hoher Leistung bis zur für das Heizteil 1a maximal zulässigen bedeutet. Bleibt die Spannung U stabil in diesem Bereich um die Nennspannung herum, so kann diese Stufe beibehalten werden, und das Heizteil 1a arbeitet mit seinem üblichen Zwei - Punkt Regelschema. Sinkt die Spannung U hingegen unter den Wert für die uneingeschränkte Betriebsfreigabe von 225 Volt ab, so wird die Recheneinheit 31 eine Freigabe auf einer geringeren Leistungsstufe errechnen und z.B. das Steuersignal S2 für die nächst niedrigere Leistungsstufe als Ergebnis liefern. Es gilt: Je kleiner die Spannung U ist, desto eine kleinere Leistungsstufe wird errechnet und freigegeben. Am unteren Ende des Spannungsbereichs wird das Versorgungsnetz also dadurch stabilisiert, dass das Wärme erzeugende Gerät 1a auf umso kleinerer Leistungsstufe arbeitet, je niedriger die Spannung U ist.

Ist die Versorgungslage mit elektrischer Energie hingegen überdurchschnittlich gut, was aus einer gemessenen Spannung U oberhalb des Nennbereichs von 225 V bis 235 V geschlossen werden kann, so wird zunächst auf kleiner Leistungsstufe durch Erzeugung des Steuersignals S1 Energie in das Volumen 21 zugeheizt, ohne dass die gewünschte Raumtemperatur von 20°C dies erfordert hätte. Es wird de facto auf Vorrat geheizt, weil eben die Energie verfügbar ist. Es wird umso mehr zugeheizt, desto höher die Spannung U ist. Beträgt die Obergrenze Uₘₐₓ z.B. 250 Volt so wird bei 240 Volt die Leistungsstufe 2 durch Schließen des Trennschalters 13b gewählt. Die letzte, höchste Leistungsstufe bei Schließen des Trennschalters 13c bleibt Situationen vorbehalten, an denen die Spannung U nahe des oberen Grenzwerts Uₘₐₓ liegt. So verbleibt immer noch eine Reserve, um netzstabilisierend einzugreifen. Es wird also abgewartet, wie sich der gemessene Spannungswert U bei Zuschalten der Leistungsstufen entwickelt. Bleibt die Spannung stabil bei 240 Volt und hat sich die Temperatur T im Volumen 21 auf 24°C erhöht, so wird die Recheneinheit 31 kein Schaltsignal S, S1-S3 generieren, damit noch eine 1°C Aufheizreserve verbleibt, um durch Energieentnahme zur Stabilisierung des Netzes beizutragen. Ab einer oberen Grenztemperatur Tₘₐₓ, bei der ein Aufenthalt in dem Raum/Volumen 21 unangenehm bzw. technisch unsinnig wird, wird der Betrieb des Wärme erzeugenden Teils 1 a blockiert. Allgemein kann gesagt werden, dass durch Pendeln der Temperatur innerhalb gewählter Grenzen das Versorgungsnetz stabilisiert wird, indem das Pendeln nach Zeit und Ausschlag über die verfügbare elektrische Energie, ausgedrückt durch die gemessene Spannung U, gesteuert wird.

Das so weit beschriebene Heizgerät 1 kann autark von sich heraus geregelt betrieben werden, ohne dass es einen Eingriff seitens einer Leitwarte bedarf. Dabei ist es sinnvoll, das Gerät 1 bei der Herstellung der Regel- und Steuereinheit 1 b dahingehend mit Zeitgliedern zu versehen, die verhindern, dass die produzierten oder per Vorschaltgerät 33 angeschlossenen Geräte 1 nicht alle gleichzeitig ihren Betrieb aufnehmen, wie es im einleitenden Teil bereits näher ausgeführt ist.

Die Recheneinheit 31 im Regel- und Steuereinheit 1b berechnet bei der Freigabe des Betriebs eine Sollwertvorgabe auf eine der gemessenen Spannung U zugeordnete Solltemperatur Tₛₒₗₗ innerhalb des zu wärmenden oder zu kühlenden Volumens 21. In diese Berechnung können noch weitere Parameter als die Wunschtemperatur T_{vorgegeben}, die Temperatur im Volumen 21 und die herrschende Spannung U eingehen. So kann z.B. in die Berechnung der Solltemperatur Tₛₒₗₗ auch noch die Außentemperatur mit einflie-βen, die Einfluss auf den Zeitpunkt der Zuschaltung haben kann und/oder auf eine gegebenenfalls höhere Wahl der oberen Grenztemperatur, weil das Volumen 21 bei tiefen Außentemperaturen schneller auskühlt als normal.

In der Figur 3 sind noch zwei weitere Kurvenverlaufe eingezeichnet, die ein weiterführendes Regelschema, das bei Vorliegen einer Zentrale Anwendung finden kann, näher erläutern. Eine gestrichelt ausgeführte Kurve 43 liegt dabei in den Spannungsbereichen jenseits des Normbereichs von 225 V - 235 V oberhalb der stärker ausgeführten Normkurve 41 und eine gepunktet gezeichnete Kurve 45 unterhalb der Normkurve 41. Die obere Kurve 43 bezieht sich auf ein Gerät 1, welches ein relativ großes Verhältnis von Bezugs- oder Nennleistung zu Volumen 21 hat und die untere Kurve auf ein Gerät 1, das auf die Temperatur T in einem Volumen 21 einwirkt, welches ein relativ kleines Verhältnis von Nenn- oder Bezugsleistung zum Volumen 21 hat. Ist das Volumen 21 z.B. ein Kühlraum von 50 m³, so ist es bei der Umsetzung vorliegender technischen Lehre nützlich zu wissen, ob dieses Volumen 21 von einem Kühlaggregat von 5 KW Leistung oder von 20 KW Leistung betrieben wird. Das Verhältnis von Nennleistung zu Volumen 21 spiegelt wieder, wie schnell die eingesetzte Energie es ermöglicht, auf die angestrebte Temperatur T zu kommen. Volumina mit einer kleinen Thermokapazität verkraften nur noch wenig Energiezufuhr, um voll zu werden, im Vergleich zu Volumina mit einer großen Thermokapazität. Wenn das Volumen 21 aber nur noch wenig Thermokapazität besitzt und an den unteren (bei Kältegeräten) oder den oberen (bei Wärmegeräten) Grenzwert ihrer Temperatur T gekühlt, bzw. aufgeheizt wird, so fällt dieses Gerät 1 als nennenswertes Spannung senkendes Mittel aus und es kann keinen signifikanten Beitrag mehr zur Stabilisierung des Netzes leisten. Diesem Effekt kann begegnet werden, indem die Recheneinheit 31 den zeitlichen Verlauf der an dem Temperatursensor 19 herrschenden Temperatur T erfasst und aus dem T/dt errechnet, wie viel Thermokapazität noch im Volumen 21 verbleibt. Je nach ermittelter Thermokapazität kann dann ein Kurvenverlauf gewählt werden, der aus der Kurvenschaar ausgewählt ist, die zwischen den Kurven 43 und 45 liegt. Es wird also die Steigung des Temperaturverlaufs herangezogen, um die Leistungsstufe oder die Betriebsfreigabe zu wählen. Dies erfolgt mit der Maßgabe, dass Geräte 1 mit einer schnellen Änderung der Temperatur T im Volumen 21 erst später zum Betrieb freigegeben werden (oder erst später auf höhere Leistungsstufen geschaltet werden), wenn die Spannung U näher an der unteren bzw. der oberen Grenzspannung Uₘᵢₙ, Uₘₐₓ liegt, als Geräte 1, die träger oder langsamer reagieren. Diese Vorgehensweise kann durch ein selbstlemendes Programm vorprogrammiert sein, so dass im Verlauf ein und desselben Kühl- oder Heizvorgangs zwischen den verschiedenen Kurven gewechselt werden kann. So wird bei einem Kühlhaus als Gerät z.B. mit umfasst, ob eine aktuelle Befüllung mit relativ warmen Gut vorliegt, was sich in einem kleinen T/dt niederschlägt, oder bereits ein eingeschwungener Kühlzustand herrscht, was einen größeren Gradienten T/dt zur Folge hat.

Die obige Betrachtung gilt für den Fall, dass die herrschende Spannung U über dem oberen Wert des Nennbereichs von 225 V - 235 V liegt. Bei Spannungen unterhalb des unteren Wertes des Nennbereichs, also bei Spannungen unterhalb von 225 Volt ist die Vorgehensweise gespiegelt oder umgekehrt: Es werden diejenigen Geräte 1 länger am Netz belassen oder länger mit erhöhter Leistung betrieben, deren Verhältnis Nennleistung zu Volumen 21 relativ groß ist. Dies verhindert, dass die Temperatur im Volumen 21 früh auf die zugeschriebene Mindesttemperatur Tₘᵢₙ fällt und die Geräte dann zuschalten müssen, wenn die Spannung U im Netz womöglich noch weiter abgefallen ist und dann das Netz weiter belastet wird, was zu seiner Destabilisierung beiträgt. Analog wird bei Geräten mit einem kleineren Verhältnis von Nennleistung zu Volumen bei kleinerer Spannung U länger gewartet, bis sie wieder freigeschaltet werden und ans Netz gehen. Es soll hier darauf hingewiesen werden, dass alle Zahlenangaben rein beispielhaft sind und an das vorliegende Versorgungssystem angepasst werden müssen.

Bei einem Bestandsheizgerät 1a ohne Leistungsstufen nach der Figur 2, wird der Betrieb seitens des Vorschaltgeräts 33 solange freigegeben und Wärme in das Volumen 21 geschoben, wie die Spannung U noch nicht ihren Mindestwert Uₘᵢₙ erreicht hat, im gezeigten Beispiel noch nicht unter 210 Volt gefallen ist. Zur Beibehaltung einer Einsatzreserve kann hier die untere Grenzspannung, bei der das Bestandsgerät 1a vom Netz genommen wird, etwas höher als die 210 Volt gewählt werden. Die Unterbrechung der Verbindung zum Netz erfolgt dann lediglich vorübergehend, um noch die genannte Reserve für die Stabilisierung in der Hinterhand zu behalten.

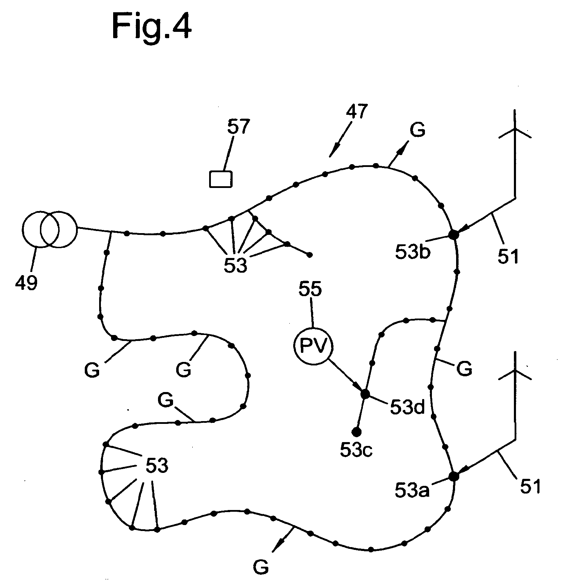

In der Figur 4 ist ein Ausschnitt aus einem Versorgungsnetz 47 schematisch dargestellt, bei dem ein Transformator 49 den Abschnitt mit elektrischer Energie versorgt. Außerdem sind an das Versorgungsnetz 47 zwei Windkraftanlagen 51 angeschlossen, die unregelmäßig und nicht planbar elektrische Energie einspeisen. An jedem der in der Figur 4 gezeichneten als Vollpunkt dargestellten Netzverknüpfungspunkten 53 ist ein Verbraucher vorhanden, der mindestens ein erfindungsgemäßes Gerät 1 betreibt. In der Regel wird jeder Verbraucher mehrere Geräte 1 besitzen, deren Volumina 21 und die dort herrschende Temperatur T_{vorgegeben} jeweils unterschiedlich sind, und daher unterschiedlich in Abhängigkeit der anliegenden Spannung U zu regeln sind. Es reicht daher aus, wenn als anliegende Spannung die am Verteilerkasten der Hausstromversorgung anliegende Spannung herangezogen wird.

Zur Arbeitsweise soll von einem fiktiven Zustand ausgegangen werden, bei dem zunächst die Windräder 51 eine hohe Energiemenge in das Versorgungsnetz 47 einspeisen, was zu einer Spannungserhöhung an deren zugeordneten Netzverknüpfungspunkten 53a und 53b von z.B. 245 Volt führt. Die hohe Spannung U bewirkt, dass auch an dem abseits gelegenen Verbraucher am Netzverknüpfungspunkt 53c noch eine ausreichend hohe Spannung von z.B. 235 Volt vorhanden ist, die die Betriebsfreigabe aller seiner Heiz- und Kühlgeräte 1 erlaubt. Bei einem Ausbleiben des Windes sinkt die Spannung am Netzverknüpfungspunkt 53c unter 225 Volt und der Betrieb der Geräte 1 unterliegt den Beschränkungen, wie sie in den Kurven der Figur 3 dargestellt ist. Die Verbraucher in unmittelbarer Nähe der Netzverknüpfungspunkte 53a und 53b profitieren von der hohen Spannung U=245 Volt, indem ihre Geräte 1 auf Vorrat arbeiten, indem die Solltemperatur Tₛₒₗₗ aufgrund der hohen Spannung U nach unten (bei Kühlgeräten) bzw. nach oben (bei Heizgeräten) verlegt wird und später bei einer Windflaute auf längere Zeit gesehen keine Beschränkungen im Betrieb erforderlich sein werden.

In der Figur 4 ist noch eine Photovoltaikanlage 55 gezeigt, die über einen Netzverknüpfungspunkt 53d elektrische Energie in das Versorgungsnetz 47 einspeist. Liegt eine Wetterlage mit viel Sonne aber wenig Wind vor, so ändern sich die Verhältnisse dahingehend, dass jetzt der Verbraucher am Netzverknüpfungspunkt 53c eine hohe Spannung U zur Verfügung hat und beim Betrieb seiner Geräte 1 auf Vorrat Energie gespeichert werden kann, um zur Stabilität des Versorgungsnetzes 47 beizutragen. Entsprechend werden die Verbraucher an den Netzverknüpfungspunkten 53a und 53b bei dort vorliegenden kleinen Netzspannungen U zunächst ihre auf Vorrat angelegte Wärme oder Kühlenergie nutzen und erst später wieder zuschalten, um neue Energie aufzunehmen.

So ergibt sich ein Kompensationsmechanismus für Spannungsausschläge nach oben und unten, bei dem unter allen beteiligten Verbrauchern die bevorratete Energie abgebaut oder neue Energie eingespeichert wird, um die Netzspannung zu stabilisieren. Dies geschieht für jeden Verbraucher unabhängig davon, inwieweit andere Verbraucher im Versorgungsnetz agieren, allein unter Einbeziehung der bei ihm herrschenden Netzspannung U. Eine besonders effektive Vorgehensweise ist es, wenn der Einsatz der Geräte 1 untereinander mittels einer Leitwarte oder Zentrale 57 koordiniert wird. Die Kommunikation mit der Zentralen 57 kann drahtlos erfolgen oder durch ein auf die Energiekabel aufgeprägtes Signal, welches an der Spannungsmess-einrichtung 29 aufmoduliert und an der Zentralen 55 abgegriffen wird.

Diese Maßnahme erlaubt eine intelligente Führung des Systems dahingehend, dass die Größe der Volumina 21 der beteiligten Verbraucher und die Temperaturveränderung in den Volumina 21 über die Zeit mit in die Regelüberlegungen einfließen kann. So ist es sinnvoll, den Betrieb von Geräten 1, die noch eine hohe nutzbare Thermokapazität zur Verfügung haben, bei einem kleineren gemessenen Spannungswert U freizugeben, als den Betrieb von Geräten 1 mit kleiner Thermokapazität. Die Geräte 1 mit der hohen aktuell verfügbaren Thermokapazität nehmen dadurch kein Regelpotential weg, weil sie auch nach einer weiter anhaltenden guten Energieversorgungslage immer noch als Speicherelement für die Netzstabilisierung zur Verfügung stehen. Geräte mit kleinerer noch nutzbarer Thermokapazität geraten bei weiterer Energiezufuhr rascher an ihre maximal oder minimal zulässige Temperatur Tₘₐₓ bzw. Tₘᵢₙ im Volumen 21 und fallen dann für erforderliche Maßnahmen zur spannungssenkenden Aufnahme regenerativ erzeugter Energie aus.

Insbesondere sind noch folgende Maßnahmen für sich genommen oder in Kombination mit den in den Ansprüchen niedergelegten Merkmalen als vorteilhafte Ausgestaltungen der Erfindung anzusehen:
- die Dauer des Betriebs nach der Betriebsfreigabe und/oder die Dauer der Betriebsfreigabe ist einstellbar;
- die Solltemperatur wird aus der an den Eingangsklemmen herrschenden Spannung oder Frequenz abgeleitet;
- die Steuervorrichtung und/oder die Spannungs- bzw. Frequenzmessvorrichtung ist/sind in das Gerät integriert;
- Die Steuervorrichtung ist mit einem Zeitglied versehen ist, welches nach der Freigabe des Betriebs eine vorgebbare Zeitspanne verstreichen lässt, bevor der Betrieb aufgenommen oder modifiziert wird.
- die obige Zeitspanne ist durch einen Zufallsgenerator vorgegeben, der sie aus einem vorgegebenen Bereich, der bei einer Wechselspannung insbesondere zwischen 0 und 5000 Wellen liegt, auswählt;
- Es ist ein linearer Bereich um die Nennspannung oder -frequenz herum vorgegeben, in dem keine Beschränkung zur Freigabe oder bezüglich der Spannungs- bzw. -frequenzabhängigkeit der Regelung erfolgt;
- Bei Geräten mit einer veränderlichen Leistungsaufnahme, erfolgt die Regelung die Leistungsaufnahme in Abhängigkeit der im Volumen gemessenen Temperatur mit der Maßgabe, dass bei kleinerer Temperaturdifferenz zwischen der Temperatur im Volumen und der zugeordneten Solltemperatur eine kleinere Leistungsaufnahme erfolgt als bei größeren Temperaturdifferenzen;
- Bei kleinen Spannungen und/oder Frequenzen zwischen 2% und 10%, insbesondere zwischen 3% und 6%, unterhalb der Nennspannung bzw. Nennfrequenz des Versorgungsnetzes werden diejenigen Geräte 1 länger am Netz belassen oder länger mit erhöhter Leistung betrieben, deren Verhältnis Nennleistung zu Volumen 21 relativ groß ist im Vergleich zu anderen Geräten.
- Bei hohen Spannungen oder Frequenzen zwischen 2% und 10%, insbesondere zwischen 3% und 6%, oberhalb der Nennspannung bzw. Nennfrequenz des Versorgungsnetzes werden diejenigen Geräte 1 früher vom Netz genommen oder früher mit reduzierter Leistung betrieben, deren Verhältnis Nennleistung zu Volumen 21 relativ groß ist im Vergleich zu anderen Geräten.

In der Beschreibung soll durchgehend die Verwendung der Messwerte der elektrischen Spannung und deren Frequenz als äquivalent angesehen werden, ohne dass darauf besonders Bezug genommen wurde.

### Bezugszeichenliste

- 1: Heizgerät (oder Kühlgerät)
- 1a: Heizteil
- 1 b: Regel- und Steuereinheit
- 3: Ventilator
- 5: Motor
- 7: Motorsteuereinrichtung
- 9: Heizgitter
- 11: Heizgittersteuerung
- 13a - 13c: Trennschalter
- 15: Regeleinheit
- 17: Messeingang
- 19: Temperatursensor
- 21: Volumen
- 25: Kabel
- 27: Normstecker
- 29: Spannungsmesseinrichtung
- 31: Recheneinheit
- 33: Vorschaltgerät
- 35: Buchse
- 37: Versorgungskabel
- 39: Rändelrad
- 41: ausgezogene Linie
- 43: gestrichelte Linie
- 45: gepunktete Linie
- 47: Versorgungsnetz
- 49: Transformator
- 51: Windkraftanlage
- 53: Netzverknüpfungspunkt
- 55: Photovoltaikanlage
- 57: Zentrale

## Patentansprüche

1. Gerät (1) zur Erzeugung von Wärme oder Kälte aus elektrischer Energie mit einer elektrischen Nennleistung von mindestens 100 Watt und zur Abgabe der Wärme oder der Kälte in ein vorgegebenes Volumen (21), wobei die Energie mit Hilfe eines Versorgungsnetzes (47) an Eingangsklemmen des Geräts (1) zur Verfügung gestellt wird, wobei eine Spannungs- und/oder Frequenzmessvorrichtung (29), die an den Eingangsklemmen herrschende Spannung (U) und/oder deren Frequenz misst, und wobei eine Regel- und Steuereinrichtung (1b) eine Änderung der Betriebsführung des Geräts (1) in Abhängigkeit von der Spannung, bzw. der Frequenz bewirkt, **dadurch gekennzeichnet, dass** an die Regel- und Steuereinrichtung (1 b) ein Temperatursensor (19) angeschlossen ist, der die an einer vorgegebenen Stelle im Volumen (21) vorliegende Temperatur misst, und dass die Regel- und Steuereinrichtung (1b) einen Sollwert für eine Solltemperatur (Tₛₒₗₗ) in Abhängigkeit von der gemessenen Spannung und/ oder der gemessenen Frequenz vorgibt, der einer Regeleinheit (15) zur Regelung auf die zu erreichende Solltemperatur zugeführt wird.

2. Gerät nach Anspruch 1, **dadurch gekennzeichnet, dass** die Regel- und Steuereinrichtung (1b) bei einer Freigabe des Betriebs eine Sollwertvorgabe auf eine der gemessenen Spannung oder Frequenz zugeordnete Solltemperatur innerhalb des zu wärmenden oder zu kühlenden Volumens (21) errechnet.

3. Gerät nach Anspruch 2, **dadurch gekennzeichnet, dass** der Zeitpunkt der Betriebsaufnahme nach der Freigabe in Abhängigkeit der im Volumen (21) gemessenen Temperatur erfolgt mit der Maßgabe, dass der Zuschaltpunkt bei kleinerer Temperaturdifferenz zwischen der Temperatur im Volumen (21) und der zugeordneten Solltemperatur später liegt als bei größeren Temperaturdifferenzen.

4. Gerät nach einem der Ansprüche 2 oder 3, **dadurch gekennzeichnet, dass** die Freigabe des Betriebs bei einer gemessenen Spannung oder Frequenz von unterhalb eines Grenzwertes der Netzspannung bzw. Nennfrequenz, insbesondere unterhalb von 95% der Nennnetzspannung bzw. -frequenz, blockiert wird, solange bei Wärmeerzeugung kein unterer Grenzwert bzw. bei Kälteerzeugung kein oberer Grenzwert der vorliegenden Temperatur erreicht ist.

5. Gerät nach einem der Ansprüche 1 bis 4, **dadurch gekennzeichnet, dass** die Regel- und Steuereinrichtung (1b) aus dem zeitlichen Verlauf der Temperaturänderung im Volumen (21) den noch zum Erreichen einer Solltemperatur benötigten Wärmebedarf bzw. die zum Erreichen einer Solltemperatur freie Thermokapazität errechnet und den errechneten Wert an einem Signalausgang zur Verfügung stellt.

6. Gerät nach einem der Ansprüche 1 bis 7, **dadurch gekennzeichnet, dass** unabhängig von dem gemessenen Spannungs- oder Frequenzwert der Betrieb des Gerätes (1) blockiert wird, wenn eine obere Grenztemperatur im Volumen (21) bei Wärmeerzeugung oder eine untere Grenztemperatur im Volumen (21) bei Kälteerzeugung erreicht ist.

7. Gerät nach einem der Ansprüche 1 bis 6, **dadurch gekennzeichnet, dass** es mehrere Schaltstufen entsprechend mehreren zugeordneten Leistungsaufnahmen aufweist, wobei die Freigabe des Betriebs auf der untersten Schaltstufe erfolgt.

8. Mindestens zwei an dasselbe Versorgungsnetz angeschlossene Geräte (1) nach einem der Ansprüche 1 bis 7, **dadurch gekennzeichnet, dass** eine Steuerzentrale vorgesehen ist, die als Eingangssignale die an den Signalausgängen der Steuereinrichtungen (1b) anliegenden errechneten Werte zugeführt sind, und die den Betrieb des Gerätes (1) mit der höheren Speicherreserve an Wärme oder Kälte bei einem kleineren gemessenen Spannungs- bzw. Frequenzwert freigibt als den Betrieb des Gerätes (1) mit geringerer Speicherkapazität.

## Claims

1. A device (1) for generating heat or cold from electrical energy having an electrical nominal power of at least 100 watts and for releasing the heat or the cold into a given volume (21), wherein the energy is made available at input terminals of the device (1) by means of a supply network (47), wherein a voltage and/or frequency measuring apparatus (29) measures the voltage (U) present at the input terminals and/or their frequency, and wherein a regulating and controlling device (1 b) produces a change in the control of the device (1) subject to the voltage and/or the frequency, **characterized in that** a temperature sensor (19) measuring the temperature present at a given place in the volume (21) is connected to the regulating and controlling device (1 b) and that the regulating and controlling device (1 b) specifies a desired value for a desired temperature (T_{desired}) subject to the voltage and/or frequency measured, said desired value being supplied to a control unit (15) for being controlled to the desired temperature to be reached.

2. The device according to Claim 1, **characterized in that**, in case operation is enabled, the regulating and controlling device (1 b) calculates a desired value specification for a desired temperature within the volume (21) to be heated or to be cooled, said desired temperature being allocated to the voltage or frequency measured.

3. The device according to Claim 2, **characterized in that** the point in time at which operation is started after having been enabled is defined subject to the temperature measured in the volume (21) and with the proviso that, if the temperature difference between the temperature in the volume (21) and the allocated desired temperature is small, activation is effected at a later time than if said temperature difference is large.

4. The device according to any one of Claims 2 or 3, **characterized in that** enabling of operation at a measured voltage or frequency below a limit value of the line voltage and/or nominal frequency, more particularly below 95% of the nominal line voltage and/or frequency, is blocked as long as a lower limit value of the present temperature fails to be reached in case of heat generation or an upper limit value of the present temperature fails to be reached in case of cold generation.

5. The device according to any one of Claims 1 to 4, **characterized in that**, based on the chronological development of the temperature change in the volume (21), the regulating and controlling device (1 b) calculates the heat still required for reaching a desired temperature or the free thermal capacity required for reaching a desired temperature and provides the calculated value at a signal output.

6. The device according to any one of Claims 1 to 7, **characterized in that**, irrespective of the voltage or frequency value measured, operation of the device (1) is blocked if an upper limit temperature is reached in the volume (21) in case of heat generation or if a lower limit temperature is reached in the volume (21) in case of cold generation.

7. The device according to any one of Claims 1 to 6, **characterized in that** it comprises a plurality of switching stages according to a plurality of allocated power consumers, wherein operation is enabled at the lowest switching stage.

8. At least two devices (1) according to Claims 1 to 7, which are connected to the same supply network, **characterized in that** a central control station is provided to which the calculated values present at the signal outputs of the controlling devices (1 b) are supplied as input signals and which enables operation of the device (1) with the higher heat or cold storage reserve at a lower measured voltage and/or frequency value than operation of the device (1) with the lower storage capacity.

## Revendications

1. Appareil (1) pour la génération de chaleur ou de froid à partir d'énergie électrique avec une puissance électrique nominale d'au moins 100 Watts et pour le transfert de la chaleur ou du froid à un volume donnée (21), l'énergie étant mise à disposition à l'aide d'un réseau d'alimentation (47) sur des pinces d'entrée de l'appareil (1), un instrument de mesure de tension et/ou de fréquence (29) mesurant la tension (U) et/ou sa fréquence sur les pinces d'entrée et un dispositif de contrôle-commande (1 b) causant une modification de l'exécution du service par l'appareil (1) en fonction de la tension et/ou de la fréquence, cet appareil étant **caractérisé par le fait qu'**un capteur de température (19) est branché sur le dispositif de contrôle-commande (1 b) pour mesurer la température présente dans un endroit spécifié dans le volume (21) et que le dispositif de contrôle-commande (1 b) spécifie une valeur de consigne pour une température de consigne (T_{cons.} ) en fonction de la tension mesurée et/ou de la fréquence mesurée, cette valeur de consigne étant transférée à une unité de réglage (15) pour le réglage de la température de consigne à atteindre.

2. Appareil selon la revendication 1 **caractérisé en ce que**, lorsque le service est validé, le dispositif de contrôle-commande (1 b) calcule une valeur de consigne au sein du volume à chauffer ou à refroidir (21) sur la base d'une température de consigne associée à la tension ou à la fréquence mesurée.

3. Appareil selon la revendication 2 **caractérisé en ce que** le moment du démarrage après la validation se fait en fonction de la température mesurée dans le volume (21) étant précisé que le moment de démarrage est plus tard en cas d'une différence de température moins importante entre la température dans le volume (21) et la température de consigne associée qu'en cas de différences de température plus importantes.

4. Appareil selon l'une des revendications 2 ou 3 **caractérisé en ce que**, en cas d'une tension ou fréquence mesurée étant inférieure à une valeur limite de la tension secteur ou de la fréquence nominale et notamment étant inférieure à 95% de la tension ou fréquence secteur nominale, la validation du service reste bloquée tant qu'aucune valeur limite inférieure n'est atteinte en cas de génération de chaleur ou qu'aucune valeur limite supérieure de la température présente n'est atteinte en cas de génération de froid.

5. Appareil selon l'une des revendications 1 à 4 **caractérisé en ce que** le dispositif de contrôle-commande (1 b) calcule la chaleur encore nécessaire pour atteindre une température de consigne ou bien la capacité thermique disponible pour atteindre une température de consigne en se basant sur l'évolution de la température du volume (21) dans le temps et met à disposition la valeur calculée sur une sortie de signaux.

6. Appareil selon l'une des revendications 1 à 7 **caractérisé en ce que**, indépendamment de la tension ou de la fréquence mesurée, le service de l'appareil (1) est bloqué si une température limite supérieure est atteinte dans le volume (21) en cas de génération de chaleur ou bien si une température limite inférieure est atteinte dans le volume (21) en cas de génération de froid.

7. Appareil selon l'une des revendications 1 à 6 **caractérisé en ce qu'**il dispose de plusieurs niveaux de commutation en fonction de plusieurs consommateurs de puissance, la validation du service se faisant au niveau de commutation le plus bas.

8. Au moins deux appareils (1) selon l'une des revendications 1 à 7 branchés sur un seul et même réseau d'alimentation et **caractérisés en ce qu'**une centrale de commande est prévue qui reçoit comme signaux d'entrée les valeurs calculées qui sont présentes sur les sorties de signal des installations de commande (1 b), et qui valide le service de l'appareil (1) avec la réserve d'accumulation de chaleur ou de froid plus élevée à une tension ou fréquence mesurée plus basse avant de valider le service de l'appareil (1) avec une capacité d'accumulation plus faible.
